# EUROPÄISCHE PATENTSCHRIFT

(11) **EP 0 397 913 B1**
(45) Veröffentlichungstag und Bekanntmachung des Hinweises auf die Patenterteilung: **07.12.1994**
(21) Anmeldenummer: 89109093.8
(22) Anmeldetag: 19.05.1989
(51) Int. Cl.: G05B 9/03, G05F 1/59

(54) **Gleichrichteranordnung**
Rectifying device
Dispositif redresseur

(43) Veröffentlichungstag der Anmeldung: 22.11.1990
(73) Patentinhaber: ELEKTRO-GERÄTE-BAU GUSTAV KLEIN GMBH & CO. KG, D-86952 Schongau (DE)
(72) Erfinder: Gebauer, Klaus, D-8921 Ingenried (DE)
(74) Vertreter: Hoffmann, Eckart, Dipl.-Ing.

(56) Entgegenhaltungen:
- EP-A- 0 093 276
- EP-A- 0 315 366
- ELEKTRISCHE ENERGIE-TECHNIK vol. 3, no. 3, Juli 1986, Seiten 38 - 39; M.SCHLÖTTERER: "Wacht ohne Wächter"
- REGELUNGS-TECHNISCHE PRAXIS. vol. 25, no. 9, September 1983, MUNCHEN DE Seiten371 - 375; F. DERNOSCHEK: "Grundlagen zuverlässiger und sicherer Rechnersysteme"

## Beschreibung

Die Erfindung betrifft eine Gleichrichteranordnung, wie sie zur Versorgung von Gleichstromverbrauchern aus einer Wechselstromquelle vielfach verwendet wird.

Bei vielen Gleichstromverbrauchern ist es wichtig, daß sie über lange Zeiträume praktisch unterbrechungsfrei mit Gleichstrom versorgt werden. Beispiele solcher Gleichstromverbraucher sind unbemannte Richtfunkstationen oder Zwischenverstärker, die oft an abgelegenen Orten installiert sind und deshalb möglichst wartungsfrei arbeiten sollen. Zur Erzielung einer hohen Zuverlässigkeit ist es bekannt, Gleichstromverbraucher über eine Gleichrichteranordnung aus dem Wechselstromnetz oder einem lokalen Wechselstromgenerator zu speisen und außerdem an den Ausgang der Gleichrichteranordnung eine Batterie anzuschließen, die bei Ausfall der Gleichrichteranordnung oder der Wechselstromquelle die Versorgung des Gleichstromverbrauchers unterbrechungsfrei übernimmt.

Bei diesem System führt jeder Fehler in der Gleichrichteranordnung sofort zur Umschaltung auf die Batterie, die in der Regel die Versorgung des Gleichstromverbrauchers nur für eine begrenzte Zeit übernehmen kann. Zur Erhöhung der Zuverlässigkeit hat man deshalb zwei Gleichrichteranordnungen über Entkoppelungsdioden parallel geschaltet. Bei einer Störung in einer der Gleichrichteranordnungen übernimmt automatisch die zweite allein die Versorgung des Verbrauchers, und erst bei Störung auch dieser zweiten Gleichrichteranordnung oder bei Ausfall der Wechselstromquelle muß auf die Batteriereserve zurückgegriffen werden (ELEKTRISCHE ENERGIE-TECHNIK, Heft 3, Juni/Juli 1986, S. 38 und 39).

Aus der angegebenen Druckschrift ist auch die Verwendung von magnetisch geregelten Gleichrichteranordnungen bekannt. Bei ihnen erfolgt die Regelung der Gleichspannung nicht im Leistungskreis, sondern über eine zusätzliche Steuerwicklung eines Transformators. Magnetisch geregelte Gleichrichteranordnungen zeichnen sich gegenüber solchen mit phasenanschnittgesteuerten Thyristorgleichrichtern durch eine nahezu fehlende Netzrückwirkung aus und sind überdies, insbesondere bei unterbrechungsfreien Stromversorgungen, auch deshalb von Vorteil, weil sie bei Ausfall der Regelelektronik ohne Regelung weiterarbeiten können. Fallen bei einem Thyristorgleichrichter die Thyristoren selbst oder die zu ihrer Steuerung dienende Regelelektronik aus, dann bedeutet dies einen Totalausfall des Gleichrichtergeräts. Da der ungeregelte Betrieb eines Gleichrichtergeräts nur eine Notlösung darstellt, werden auch bei Verwendung magnetisch geregelter Geräte zwei Gleichrichteranordnungen über Entkoppelungsdioden parallel geschaltet.

Die komplette Verdoppelung der Gleichrichteranordnungen ist teuer und bedeutet außerdem eine erhebliche Vergrößerung des Platzbedarfs.

Aus der Druckschrift EP-A-0 315 366 ist ein Gleichspannungsversorgungsgerät bekannt, das Haupt- und Nebenregler aufweist. Bei den Reglern handelt es sich um Schaltregler, die parallel eine gemeinsame Last speisen. Jeder Regler enthält einen Steuerteil und einen Leistungsteil. Bei Ausfall eines der Regler wird er automatisch durch einen für den Normalbetrieb nicht benötigten Reserveregler ersetzt. Wie bei dem vorgenannten Stand der Technik, geht auch die Lehre dieses Standes der Technik dahin, bei Ausfall einer mehrerer parallel geschalteter Geräte, dieses komplett durch ein Reservegerät zu ersetzen.

Aus der Druckschrift "Regelungs-Technische Praxis", Band 25, Nr. 9, September 1983, Seiten 371 bis 375, ist es bekannt, bei Einsatz von Rechnern in sicherheitsrelevanten Anwendungen, mehrere Rechner parallel zu betreiben, um durch Vergleich ihrer Ausgaben, einen Fehler zu erkennen und ein Fehlverhalten des Systems zu vermeiden. Rechnerausfälle können entweder dadurch erkannt werden, daß man einen Rechner eine vorgegebene Rechenoperation ausführen läßt und das Ergebnis mit einem abgespeicherten Sollwert vergleicht, oder dadurch, daß man die Übereinstimmung der Ausgaben mehrerer Parallelarbeiten der Rechner prüft.

Aufgabe der Erfindung ist es, eine Gleichrichteranordung zu schaffen, die für den geschilderten Einsatzzweck geeignet ist und bei mindestens der gleichen Zuverlässigkeit, wie sie zwei in beschriebener Weise parallel geschaltete Gleichrichteranordnungen aufweisen, deutlich billiger und platzsparender als letztere ist.

Diese Aufgabe wird erfindungsgemäß durch eine Gleichrichteranordnung gemäß Patentanspruch 1 gelöst.

Vorteilhafte Weiterbildungen der Erfindung sind in den Unteransprüchen gekennzeichnet.

Der beanspruchten Erfindung liegt die Idee zugrunde, im Leistungsteil der Gleichrichteranordnung ausschließlich Elemente mit einer geringen Ausfallwahrscheinlichkeit vorzusehen und lediglich den Regelungsteil der Gleichrichteranordnung, der notgedrungen Elemente mit höherer Ausfallwahrscheinlichkeit enthält, zweifach vorzusehen. Die Voraussetzung von Elementen mit geringer Ausfallwahrscheinlichkeit im Leistungsteil läßt sich mit magnetisch geregelten Gleichrichteranordnungen erfüllen. Diese weisen im Leistungsteil einen Transformator, der als außerordentlich zuverlässig angesehen werden kann, ungesteuerte Gleichrichterdioden und diesen nachgeschaltete Siebmittel auf. Auch diese Gleichrichterdioden und die Siebmittel weisen eine vergleichsweise geringe Ausfallwahrscheinlichkeit auf. Es reicht deshalb, wenn erfindungsgemäß diese Elemente des Leistungsteils nur einfach vorgesehen werden. Die Spannungsregelung erfolgt mit Hilfe eines Reglers und eines diesem nachgeschalteten Stellglieds, das in den Steuerkreis des Transformators eingeschaltet ist. Nicht nur der Regler, sondern auch das Stellglied sind in diesem Fall nicht vom Laststrom durchflossen, wodurch, insbesondere auch bezüglich des Stellglieds, die Ausfallwahrscheinlichkeit deutlich herabgesenkt wird. Werden nun zwei Regeleinrichtungen mit Regler und Stellglied eingesetzt und die Möglichkeit der Umschaltung im Störungsfall von einer Regeleinrichtung auf die andere vorgesehen, so läßt sich auf relativ einfache Weise eine ausgesprochen hohe Zuverlässigkeit erreichen. Da lediglich die Regelungselektronik, deren Platzbedarf im Vergleich zu dem der Leistungselemente vernachlässigbar ist, doppelt vorgesehen wird, wird der Platzbedarf einer solchen Gleichrichteranordnung gegenüber einer herkömmlichen Gleichrichteranordnung kaum erhöht, während die Kosten im Vergleich zu zwei herkömmlichen Gleichrichteranordnungen deutlich niedriger werden.

Die Regeleinrichtungen sind je mit einer Überwachungseinrichtung versehen, durch die die Regler und die Stellglieder überwacht werden, damit gegebenenfalls eine Umschaltung von der einen Regeleinrichtung auf die andere und/oder eine Störungsanzeige erfolgt.

Ein Ausführungsbeispiel der Erfindung wird nachfolgend anhand der Zeichnungen im einzelnen erläutert. Es zeigen:
- Fig. 1: Schematisch, teilweise in Blockform, ein Schaltbild einer Ausführungsform der Erfindung,
- Fig. 2: schematisch eine Ausführungsform einer Überwachungseinrichtung und
- Fig. 3: eine Schaltungsanordnung zur Überwachung von Regler und Stellglied der Reserveregeleinrichtung.

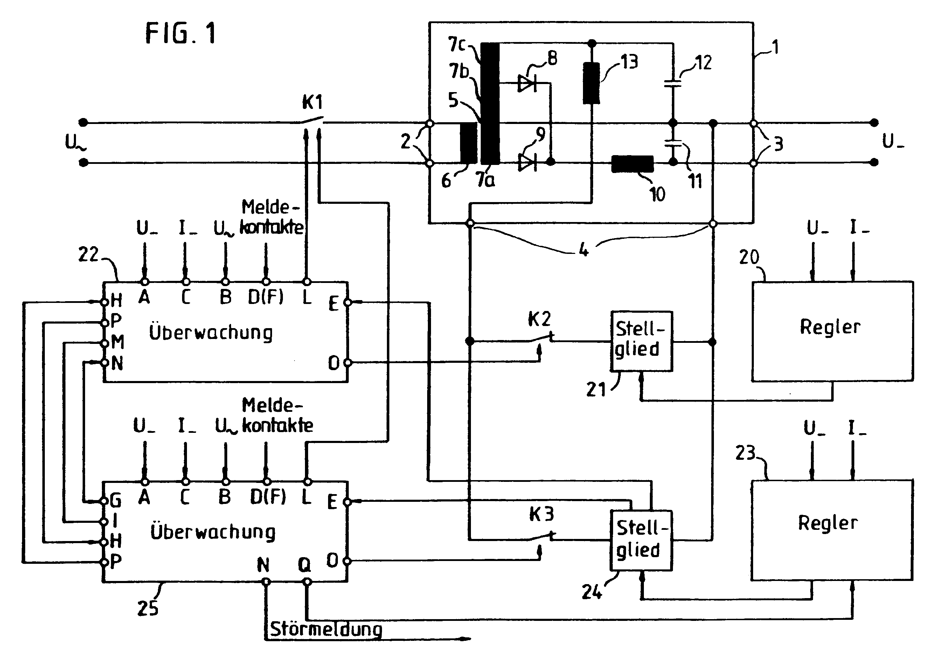

Gemäß Fig. 1 enthält die Gleichrichteranordnung einen Leistungsteil 1 mit Wechselstromeingangsanschlüssen 2, Gleichstromausgangsanschlüssen 3 sowie Steueranschlüssen 4, an die ein Regelungsteil angeschlossen ist. Der Leistungsteil 1 weist einen Transformator 5 auf, dessen Primärwicklung 6 mit den Eingangsanschlüssen 2 verbunden ist. Die Sekundärwicklung 7 des Transformators ist durch Anzapfungen in Wicklungsabschnitte 7a, 7b und 7c aufgeteilt. Die Wicklungsabschnitte 7a und 7b mit ihrer Mittelanzapfung speisen einen Gleichrichter mit zwei ungesteuerten Gleichrichterdioden 8, 9 in Mittelpunktschaltung. Dem Gleichrichter folgt ein Siebglied mit einer Drossel 10 und einem Kondensator 11. Es sei betont, daß die dargestellte Gleichrichterschaltung nur ein Beispiel darstellt und durch andere Gleichrichterschaltungen ersetzt werden könnte. Über die Wicklungsabschnitte 7b und 7c ist ein Kondensator 12 geschaltet. Ihm parallel liegt, wie später beschrieben, über eine Umschalteinrichtung und Stellglieder eine Drossel 13. Die Eingangsanschlüsse 2 sind über ein Schütz K1, das zur Abschaltung bei Überspannung dient, mit einer die Wechselspannung U_{∼} liefernden Wechselstromquelle verbunden.

Ohne daß dies hier im einzelnen dargelegt werden soll, kann bei der soweit beschriebenen Anordnung in an sich bekannter Weise die Ausgangsspannung an den Ausgangsanschlüssen 3 über die Steuerung des Stroms durch die Drossel 13 beeinflußt werden (vgl. auch ELEKTRONIK, Nr. 15, 1987, S. 63 - 65)

Der Regelungsteil enthält eine Hauptregeleinrichtung mit einem Regler 20, einem Stellglied 21 und einer Überwachungseinrichtung 22, sowie eine Reserveregeleinrichtung mit einem Regler 23, einem Stellglied 24 und einer Überwachungseinrichtung 25. Das Stellglied 21, bei dem es sich vorzugsweise um einen Triac handelt, dessen Steuereingang mit dem Ausgang des Reglers 20 verbunden ist, ist über ein Schütz K2 mit den Steueranschlüssen 4 des Leistungsteils 1 verbunden. In entsprechender Weise ist das Stellglied 24, bei dem es sich gleichermaßen vorzugsweise um einen Triac handelt, dessen Steuereingang mit dem Regler 23 verbunden ist, über ein Schütz K3 an die Steueranschlüsse 4 des Leistungsteils angeschlossen. Das Schütz K2 wird von der Überwachungseinrichtung 22, das Schütz K3 von der Überwachungseinrichtung 25 ein- bzw ausgeschaltet.

Die Regler 20 und 23 sind gleichermaßen mit der Ausgangsgleichspannung U₋ und dem Laststrom I₋ beaufschlagt, die mittels nicht gezeigter Meßstellen gewonnen werden. Die Regler 20 und 23 sind identisch aufgebaut und vorzugsweise als PI-Regler mit Strombegrenzung ausgeführt. Der Spannungssollwert und der Grenzstrom Imax sind fest eingestellt, könnten aber in gleicher Weise über nicht dargestellte Eingänge von außen zugeführt werden. Solange der Laststrom I₋ unterhalb des Grenzstroms Imax liegt regelt derjenige Regler, dessen Stellglied 21, 24 über das zugehörige Schütz angeschaltet ist, die Ausgangsspannung U- auf den voreingestellten Sollwert. Erreicht der Laststrom den Grenzstrom setzt die Strombegrenzung ein. Wenn es sich bei den Stellgliedern 21 und 24 um Triacs handelt, wird mittels der Regler deren Zündwinkel nach Maßgabe der Regelabweichung vorgegeben und damit der Stromfluß durch die Drossel 13 gesteuert.

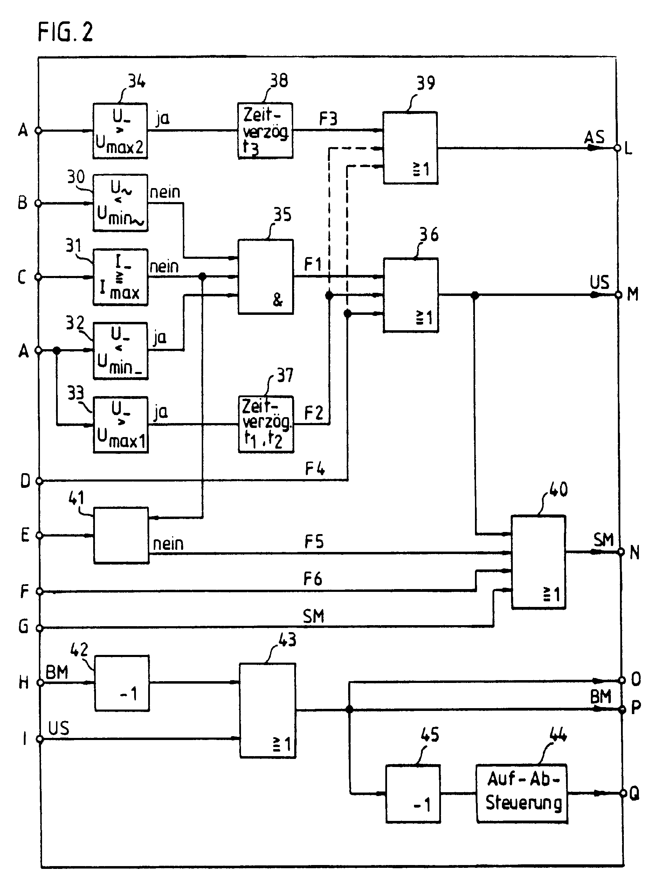

Unter Bezugnahme auf Fig. 2 soll nun die Funktion der Überwachungseinrichtungen 22 und 25 erläutert werden. Der Herstellungskosten und einfachen Wartung wegen sind die Überwachungseinrichtungen beider Regeleinrichtungen gleich aufgebaut, wobei die nachfolgend beschriebenen notwendigen Unterschiede durch Schaltereinstellungen an den Überwachungseinrichtungen oder durch die äußere Verdrahtung innerhalb der Gleichrichteranordnung vorgegeben werden.

Die Überwachungseinrichtung enthält Vergleicher 30 bis 34. Der Vergleicher 30 wird mit der Netzspannung U_{∼} beaufschlagt und liefert ein Ausgangssignal, solange die Netzspannung nicht unter einem vorgegebenen Grenzwert Umin_{∼} liegt. Der Vergleicher 31 wird mit dem Laststrom I₋ beaufschlagt und liefert ein Ausgangssignal, solange der Laststrom unterhalb des Grenzstroms Imax liegt. Der Vergleicher 32 wird mit der Ausgangsspannung U₋ beaufschlagt und liefert ein Fehlersignal, wenn die Ausgangsspannung um mehr als eine zulässige Toleranz unter dem Sollwert liegt, d.h. U₋ < Umin-. Ein UND-Glied 35 verknüpft die Ausgangssignale der Vergleicher 30 bis 32, gibt also seinerseits dann ein Fehlersignal F1 aus, wenn der Vergleicher 32 eine Unterspannung signalisiert, obwohl weder eine Unterspannung des Netzes vorliegt, noch die Strombegrenzung des Reglers eingesetzt hat. Dieser Zustand kennzeichnet eine Störung im Regler 20 (23) oder im Stellglied 21 (24).

Das Fehlersignal F1 vom UND-Glied 35 gelangt über ein ODER-Glied 36 als Umschaltsignal US auf einen Ausgang M der Überwachungseinrichtung.

Der Vergleicher 33 vergleicht die Ausgangssspannung U- mit einem ersten Überspannungspegel Umax1 und liefert ein Fehlersignal an ein Zeitglied 37, wenn die Ausgangsspannung diesen Pegel übersteigt. Das Zeitglied 37 liefert ein Fehlersignal F2 an einen zweiten Eingang des ODER-Glieds 36, wenn das Fehlersignal vom Vergleicher 33 länger als die eingestellte Zeit des Zeitglieds 37 ansteht. Der Vergleicher 34 vergleicht die Ausgangsspannung U₋ mit einem zweiten Überspannungspegel Umax2 und beaufschlagt ein Zeitglied 38, wenn die Ausgangsspannung diesen Pegel überschreitet. Das Zeitglied 38 erzeugt ein Fehlersignal F3, wenn die Ausgangsspannung länger als die am Zeitglied 38 eingestellte Zeit t3 über dem Wert Umax2 (Umax2 > Umax1) liegt. Das Fehlersignal F3 gelangt an ein zweites ODER-Glied 39, dessen Ausgangssignal AS über das Schütz K1 (vgl. Fig. 1) die Abschaltung der Gleichrichteranordnung vom Netz bewirkt. Die Verzögerungszeit des Zeitglieds 37 ist bei der Überwachungseinrichtung 22, also derjenigen der Hauptregeleinrichtung, auf den Wert t1 und bei der Überwachungseinrichtung 25, also derjenigen der Reserveregeleinrichtung, auf den Wert t2 eingestellt, wobei t1<t2<t3 gilt. Bei intakter Hauptregeleinrichtung bewirkt also das Fehlersignal F2 nach der Zeit t1 eine Umschaltung auf die Reserveregeleinrichtung. Beruht das Fehlersignal F2 auf einem Fehler in der Hauptregeleinrichtung, dann wird es nach dem Umschalten nach einer gewissen Zeitspanne (< t2 - t1) verschwunden sein. Besteht es indes auch nach Ablauf von t2 noch fort, dann hat der Fehler eine andere Ursache und führt in der Überwachungseinrichtung 25 über das ODER-Glied 39 zur Ausgabe des Abschaltsignals AS.

Am Eingang D der Überwachungseinrichtung liegt ein Fehlersignal F4 an, wenn ein Sicherungsautomat in der Stromversorgung der zugehörigen Regeleinrichtung abgefallen ist. Dieses Fehlersignal F4 gelangt an einen dritten Eingang des ODER-Glieds 36.

Wie in Fig. 2 gestrichelt dargestellt, liegen bei der Überwachungseinrichtung 25 die Fehlersignale F2 und F4 auch noch an einem zweiten bzw. einem dritten Eingang des ODER-Glieds 39 an, wobei für das Fehlersignal F4 dem entsprechenden Eingang des ODER-Glieds 39 noch ein (nicht dargestelltes) UND-Glied vorgeschaltet ist, das das Fehlersignal F4 nur passieren läßt, wenn bereits eine Umschaltung auf die Reserveregeleinrichtung erfolgt ist.

Ein drittes ODER-Glied 40 verknüpft verschiedene Signale zu einem Störmeldungssignal SM. An einem Eingang des ODER-Glieds 40 liegt das Umschaltsignal US vom ODER-Glied 36 an. Wenn das ODER-Glied 36 eine Umschaltung von der Hauptregeleinrichtung auf die Reserveregeleinrichtung bewirkt, soll auf diese Weise zugleich eine Störmeldung ausgegeben werden. An einem Eingang E der Überwachungseinrichtung liegt die Spannung über dem Stellglied 24 an, die in später näher erläuterter Weise in einer Prüfschaltung 41 verarbeitet wird. Die Prüfschaltung 41 erzeugt ein Fehlersignal F5, wenn in der Reserveregeleinrichtung eine Störung auftritt, während die Hauptregeleinrichtung störungsfrei arbeitet. Das Fehlersignal F5 liegt an einem weiteren Eingang des ODER-Glieds 40 an. Ein Eingang F der Überwachungseinrichtung erhält ein Fehlersignal F6, wenn sich das zugehörige Stellgliedschütz K2 bzw. K3 in falscher Stellung befindet. Im störungsfreien Zustand ist das Schütz K2 eingeschaltet, während das Schütz K3 ausgeschaltet ist, so daß das Stellglied 21 in Funktion ist. Bezüglich des Schützes K2 bedeutet "falsche Stellung" deshalb den ausgeschalteten Zustand und bezüglich des Schützes K3 den eingeschalteten Zustand. Die Schütze K2 und K3 können mit Hilfskontakten zum Erkennen der momentanen Stellung ausgerüstet sein. Das Fehlersignal F6 liegt an einem Eingang des ODER-Glieds 40 an. Das Störmeldungssignal SM vom ODER-Glied 40 der Überwachungseinrichtung 22 gelangt über dessen Ausgang N an den Eingang G der Überwachungseinrichtung 25, deren Ausgang N mit einer entsprechenden Störanzeigeeinrichtung verbunden ist.

Wenn die Gleichrichteranordnung mit dem beschriebenen Aufbau eingeschaltet wird, kommt automatisch die Hauptregeleinrichtung mit dem Regler 20 und dem Stellglied 21 in Betrieb. Der Ausgang M der Überwachungseinrichtung 22 ist mit dem Eingang I der Überwachungseinrichtung 25 verbunden. Der Ausgang P der Überwachungseinrichtung 22 ist mit dem Ausgang H der Überwachungseinrichtung 25 verbunden. In gleicher Weise ist der Ausgang P der Überwachungseinrichtung 25 mit dem Eingang H der Überwachungseinrichtung 22 verbunden.

Solange die Hauptregeleinrichtung störungsfrei arbeitet, erzeugt ein über einen Inverter 42 mit dem Eingang H sowie direkt mit dem Eingang I verbundenes ODER-Glied 43 in der Überwachungseinrichtung 25 kein Ausgangssignal, so daß eine später näher erläuterte Auf-Ab-Steuerung über einen Inverter 45 aktiviert wird, das Schütz K3 für das Stellglied 24 ausgeschaltet bleibt und keine Betriebsmeldung BM an die Überwachungseinrichtung 22 geliefert wird ("kein Signal" bedeutet den einen von zwei beliebigen binären Signalzuständen).

Kommt es in der Hauptregeleinrichtung zu einem der Fehlersignale F1, F2 oder F4 und in deren Folge zu dem Umschaltsignal US, dann ruft dieses ein Ausgangssignal des ODER-Glieds 43 der Überwachungseinrichtung 25 hervor. Dieses Ausgangssignal veranlaßt über den Ausgang O und das Schütz K3, daß das Stellglied 24 aktiviert wird. Über den mit dem Ausgang P der Überwachungseinrichtung 25 verbundenen Eingang H der Überwachungseinrichtung 22 und deren Inverter 42 verschwindet das Ausgangssignal des ODER-Glieds 43 der Überwachungseinrichtung 22. Über den Ausgang 0 der Überwachungseinrichtung 22 wird das Schütz K2 geöffnet und damit die Hauptregeleinrichtung deaktiviert. In der Überwachungseinrichtung 25 deaktiviert das Ausgangssignal des ODER-Glieds 43 aufgrund des Inverters 45 die Auf-Ab-Steuerung 44. Nach dieser Umschaltung hat die Reserveregeleinrichtung die Regelung der Ausgangsspannung U- übernommen. Tritt nun das Fehlersignal F1 als Zweitfehler auf, ist also die Ausgangsspannung U- zu niedrig, dann arbeitet die Gleichrichteranordnung ungeregelt weiter. Tritt indes eines der Fehlersignale F2, F3 oder F4 als Zweitfehler auf, dann wird die Gleichrichteranordnung, über das ODER-Glied 39 und das Schütz K1 abgeschaltet.

Die voranstehend im einzelnen beschriebene Signalverarbeitung zum Erkennen von Störungen und gegebenenfalls zur Umschaltung von der Hauptregeleinrichtung auf die Reserveregeleinrichtung stellt lediglich ein bevorzugtes Ausführungsbeispiel dar. Insbesondere können weitere oder andere Signale zur Überwachung herangezogen werden. Auch kann die Verknüpfung mit anderen als den beschriebenen Verknüpfungsgliedern erfolgen, solange damit Störungsfälle erkannt werden und die erforderliche Umschaltung oder Abschaltung ausgelöst wird.

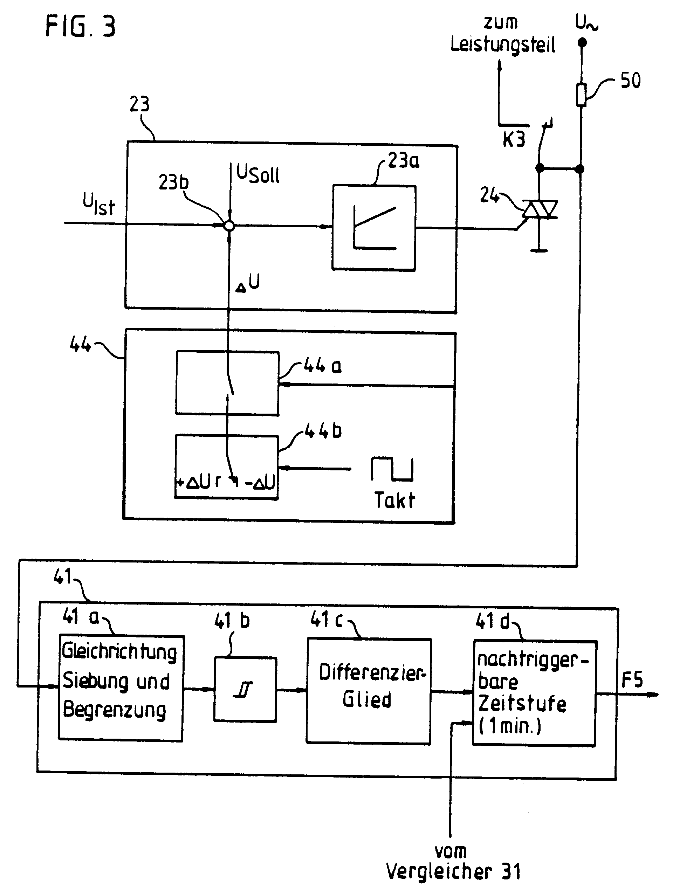

Während bei der beschriebenen Anordnung die Hauptregeleinrichtung störungsfrei ihre Aufgabe erfüllt, läuft die Reserveregeleinrichtung parallel mit, wobei lediglich wegen des geöffneten Schützes K3 die Steuerung ihres Stellglieds 24 auf den Leistungsteil 1 keinen Einfluß hat. Es kann aber bei diesem Parallelbetrieb durchaus eine Störung in der Reserveregeleinrichtung auftreten, bevor dies bei der Hauptregeleinrichtung der Fall ist. Es ist deshalb zweckmäßig, die Funktionsfähigkeit der Reserveregeleinrichtung ständig zu überprüfen, auch solange sie noch nicht aktiviert ist. Hierfür sind die Prüfschaltung 41 und die Auf-Ab-Steuerung 44 vorgesehen, die nachfolgend anhand von Fig. 3 im einzelnen erläutert werden sollen.

Fig. 3 zeigt schematisch den eigentlichen Regelteil 23a des Reglers 23, dem die Soll-Ist-Vergleichsstelle 23b vorgeschaltet ist und der seinerseits das Stellglied 24, hier als Triac dargestellt, steuert. Das Stellglied 24 ist über einen hochohmigen Widerstand 50 an die Wechselstromquelle angeschlossen. Über ein Schaltglied 44a und einen Umschalter 44b, der von einem Taktsignal gesteuert wird, wird die Vergleichsstelle 23b zusätzlich mit einer Rechteckschwingung von ±ΔU beaufschlagt. Die Amplitude ΔU dieser Schwingung beträgt vorzugsweise etwa 2% des Sollwertes für die Ausgangsspannung U₋. Diese Überlagerung der Rechteckschwingung führt bei funktionsfähigem Regler 23 und Stellglied 24 zu periodischen Schwankungen der Spannung über dem Stellglied 24. Die Prüfschaltung 41 ermittelt die Funktionsfähigkeit von Regler 23 und Stellglied 24 aufgrund des Vorhandenseins oder Nichtvorhandenseins dieser periodischen Schwankungen. Zu diesem Zweck wird die Spannung über dem Stellglied 24 mittel eines ersten Schaltungsteils 41a gleichgerichtet, gesiebt und begrenzt. Ein nachfolgender Schmitt-Trigger 41b bewirkt eine Signalformung. Ein Differenzierglied 41c erzeugt aufgrund der Signalflanken im Ausgangssignal des Schmitt-Triggers 41b Steuerimpulse, mit denen eine nachtriggerbare Zeitstufe 41d beaufschlagt wird. Diese erzeugt das Fehlersignal F5, sobald die Steuerimpulse vom Differenzierglied 41d für mehr als bespielsweise eine Minute ausbleiben.

Wenn aufgrund einer Störung in der Hauptregeleinrichtung auf die Reserveregeleinrichtung umgeschaltet wird, erfolgt über den Inverter 45 sofort eine Abschaltung der Auf-Ab-Steuerung 44. Sollte diese Abschaltung versagen, wäre dies wegen der relativ geringen Amplitude der überlagerten Schwingung ohne große Auswirkungen auf die Ausgangsspannung.

Mit Hilfe der Auf-Ab-Steuerung 44 und der Prüfschaltung 41 können zugleich die Sollwerte beider Regler 20 und 23 überwacht werden. Auch wenn einer der Sollwerte nicht stimmt, tritt am Stellglied 24 keine Stellbewegung mehr auf, so daß eine Störmeldung erfolgt. Ist beispielsweise der Sollwert des Reglers 20 um mehr als 2% zu hoch, dann ist bei intakter Hauptregeleinrichtung auch die Ausgangsspannung U-(Istwert) entsprechend zu hoch. Wird diesem Istwert eine Schwingung mit der Amplitude von 2% des Sollwertes überlagert und das Ergebnis mit dem richtigen Sollwert des Reglers verglichen, so wird dieser Regler sowohl bei den positiven als auch bei den negativen Halbschwingungen des Überlagerungssignals einen zu hohen Istwert feststellen. Das Stellglied 24 verbleibt dann in einem seiner Endzustände, so daß die Prüfschaltung 41 keine Stellbewegung mehr feststellt. Bei einem kleinen Sollwert des Reglers 20 oder bei einem falschen Sollwert des Reglers 23 treten vergleichbare Ergebnisse ein.

Die Zeitstufe 41d ist mit einem Sperreingang versehen, der mit dem Ausgang des Vergleichers 31 verbunden sein kann (vgl. Fig. 2). Wenn bei starker Belastung die Strombegrenzung des Reglers 20 einsetzt, kann der Istwert der Ausgangsspannung U₋ um mehr als z.B. 2% des Sollwertes unter diesem liegen. Ein solcher Zustand würde, wie sich aus dem Voranstehenden ergibt, zu einer Störungsmeldung führen. Diese wird verhindert, indem im Fall der Strombegrenzung die Zeitstufe über den Sperreingang deaktiviert wird.

## Patentansprüche

1. Gleichrichteranordung, umfassend
einen Transformator (5) mit magnetisch steuerbarer Ausgangsspannung,
einen dem Transformator nachgeschalteten Gleichrichter (8, 9),
eine elektronische Hauptregeleinrichtung mit einem Regler (20), einem Stellglied (21) und einer Überwachungseinrichtung (22),
eine der Hauptregeleinrichtung im wesentlichen gleichende und ihr parallel geschaltete Reserveregeleinrichtung (23, 24, 25), und
eine Umschalteinrichtung (K2, K3) die entweder das Stellglied (21) der Hauptregeleinrichtung oder dasjenige (24) der Reserveregeleinrichtung mit einem Steuerkreis des Transformators verbindet und bei einem von der Überwachungseinrichtung (22) der Hauptregeleinrichtung festgestellten Fehler im Regler (20) oder Stellglied (21) der Hauptregeleinrichtung von dem Stellglied (21) der Hauptregeleinrichtung auf dasjenige der Reserveregeleinrichtung umschaltet.

2. Gleichrichteranordnung nach Anspruch 1, **gekennzeichnet** durch eine Einrichtung (41, 44) zur Prüfung von Regler (23) und Stellglied (24) der Reserveregeleinrichtung, während deren Stellglied (24) von dem Steuerkreis des Transformators (5) getrennt ist.

3. Gleichrichteranordnung nach Anspruch 2, dadurch **gekennzeichnet**, daß die Prüfeinrichtung eine Auf-Ab-Steuerung (44) enthält, von der der Regler (23) der Reserveregeleinrichtung zusätzlich zu Soll-Wert und Ist-Wert mit einer periodischen Schwingung beaufschlagt wird, sowie eine Prüfschaltung (41) enthält, die prüft, ob am Stellglied (24) der Reserveregeleinrichtung der periodischen Schwingung entsprechende Reaktionen auftreten.

4. Gleichrichteranordnung nach Anspruch 3, dadurch **gekennzeichnet**, daß die dem Regler (23) der Reserveregeleinrichtung zugeführte periodische Schwingung eine Amplitude von etwa 2% des Soll-Wertes der Ausgangsgleichspannung (U₋) aufweist.

5. Gleichrichteranordnung nach einem der Ansprüche 3 oder 4, dadurch **gekennzeichnet**, daß die Stellglieder (21, 24) jeweils einen Triac enthalten, daß das Stellglied (24) der Reserveregeleinrichtung über eine Impedanz (50) mit einer Wechselspannung beaufschlagt wird und daß die Prüfschaltung einen Gleichrichter (41a) zur Gleichrichtung der Spannung über dem Stellglied (24), einen dem Gleichrichter nachgeschalteten Signalformer (41b), ein dem Signalformer folgendes Differenzierglied (41c) und ein von Ausgangsimpulsen des Differenzierglieds rückstellbares Zeitglied (41d) aufweist, welches ein Fehlersignal (F5) abgibt, wenn für eine vorgegebene Zeitspanne kein Ausgangsimpuls vom Differenzierglied (41c) abgegeben wird.

6. Gleichrichteranordnung nach einem der vorhergehenden Ansprüche, dadurch **gekennzeichnet**, daß jede der Überwachungseinrichtungen (22, 25) von Hauptregeleinrichtung und Reserveregeleinrichtung eine Vielzahl von Vergleichern (30-34) zum Vergleich der Eingangswechselspannung (U_{∼}), der Ausgangsgleichspannung (U₋) und des Laststroms (I₋) mit vorgegebenen Bezugswerten enthält, denen eine Auswertelogik (30-40, 42, 43) nachgeschaltet ist, die nach Maßgabe der Eingangssignale und abhängig davon, ob die Hauptregeleinrichtung oder die Reserveregeleinrichtung aktiv ist, ein Störmeldungssignal (SM), ein Umschaltsignal (US) zum Umschalten von der Hauptregeleinrichtung auf die Reserveregeleinrichtung oder ein Abschaltsignal (AS) zum Abschalten der Gleichrichteranordnung abgibt.

## Claims

1. A rectifier arrangement comprising:
a transformer (5) with magnetically controllable output voltage,
a rectifier (8, 9) connected on the output side of the transformer,
an electronic main regulating means having a regulator (20), a control member (21) and a monitoring means (22),
a reserve regulating means (23, 24, 25) which is substantially the same as the main regulating means and which is connected in parallel therewith, and
a change-over switching means (K2, K3) which connects either the control member (21) of the main regulating means or that (24) of the reserve regulating means to a control circuit of the transformer and switches over from the control member (21) of the main regulating means to that of the reserve regulating means in the event of a fault, detected by the monitoring means (22) of the main regulating means, in the regulator (20) or the control member (21) of the main regulating means.

2. A rectifier arrangement according to claim 1 characterised by a means (41, 44) for testing the regulator (23) and the control member (24) of the reserve regulating means while the control member (24) thereof is separated from the control circuit of the transformer (5).

3. A rectifier arrangement according to claim 2 characterised in that the testing means includes an up-down control (44) by which the regulator (23) of the reserve regulating means, in addition to the reference value and the actual value, is acted upon by a periodic oscillation, and includes a testing circuit (41) which tests whether reactions corresponding to the periodic oscillation occur at the control member (24) of the reserve regulating means.

4. A rectifier arrangement according to claim 3 characterised in that the periodic oscillation supplied to the regulator (23) of the reserve regulating means is of an amplitude of about 2% of the reference value of the dc output voltage (U₋).

5. A rectifier arrangement according to one of claims 3 and 4 characterised in that the control members (21, 24) each include a triac, that the control member (24) of the reserve regulating means is acted upon by a ac voltage by way of an impedance (50) and that the testing circuit has a rectifier (41a) for rectifying the voltage across the control member (24), a signal shaper (41b) which is connected downstream of the rectifier, a differentiating member (41c) which follows the signal shaper and a timing member (41d) which can be reset by output pulses of the differentiating member and which outputs a fault signal (F5) if no output pulse is outputted by the differentiating member (41c) for a predetermined period of time.

6. A rectifier arrangement according to one of the preceding claims characterised in that each of the monitoring means (22, 25) of the main regulating means and the reserve regulating means includes a plurality of comparators (30-34) for comparison of the ac input voltage (U_{∼}), the dc output voltage (U₋) and the load current (I₋) to predetermined reference values, downstream of which is connected an evaluation logic means (30-40, 42, 43) which in accordance with the input signals and in dependence on whether the main regulating means or the reserve regulating means is active, outputs a fault indication signal (SM), a change-over switching signal (US) for switching over from the main regulating means to the reserve regulating means or a switch-off signal (AS) for switching off the rectifier arrangement.

## Revendications

1. Dispositif redresseur, comportant
un transformateur (5) à tension de sortie réglable magnétiquement,
un redresseur (8, 9) disposé en aval du transformateur,
un dispositif de régulation électronique principal équipé d'un régulateur (20), d'un élément de réglage (21) et d'un dispositif de contrôle (22),
un dispositif de régulation auxiliaire (23, 24, 25) sensiblement identique au dispositif de régulation principal et monté en parallèle avec lui, et
un dispositif de commutation (K2, K3), qui relie soit l'élément de réglage (21) du dispositif de régulation principal, soit celui (24) du dispositif de régulation auxiliaire, à un circuit de commande du transformateur, et dans le cas d'un défaut constaté par le dispositif de contrôle (22) du dispositif de régulation principal dans le régulateur (20) ou dans l'élément de réglage (21) du dispositif de régulation principal, commute de l'élément de réglage (21) du dispositif de régulation principal sur celui du dispositif de régulation auxiliaire.

2. Dispositif redresseur selon la revendication 1, caractérisé par un dispositif (41, 44) en vue du contrôle du régulateur (23) et de l'élément de réglage (24) du dispositif de régulation auxiliaire, tandis que l'élément de réglage de celui-ci est séparé du circuit de commande du transformateur (5).

3. Dispositif redresseur selon la revendication 2, caractérisé en ce que le dispositif de contrôle comporte un asservissement élévateur-abaisseur (44) par lequel le régulateur (23) du dispositif de régulation auxiliaire, en plus d'une valeur de consigne et d'une valeur réelle, reçoit une oscillation périodique, et comporte également un circuit de vérification (41) qui vérifie si des réactions correspondant à l'oscillation périodique apparaissent dans l'élément de réglage (24) du dispositif de régulation auxiliaire.

4. Dispositif redresseur selon la revendication 3, caractérisé en ce que l'oscillation périodique appliquée au régulateur (22) du dispositif de régulation auxiliaire présente une amplitude d'environ 2% de la valeur de consigne de la tension continue de sortie (U-).

5. Dispositif redresseur selon l'une des revendications 3 ou 4, caractérisé en ce que les éléments de réglage (21, 24) comportent chacun un Triac, en ce que l'élément de réglage (24) du dispositif de régulation auxiliaire est alimenté par l'intermédiaire d'une impédance (50) par une tension alternative et en ce que le circuit de contrôle comporte un redresseur (41a) en vue du redressement de la tension par l'intermédiaire de l'élément de réglage (24), un circuit de mise en forme de signaux (41b) disposé en aval du redresseur, un élément différentiateur (41c) à la suite du circuit de mise en forme de signaux et un élément de temporisation (41d) pouvant être ramené à zéro par des impulsions de sortie de l'élément différentiateur, qui délivre un signal d'erreur (F5), lorsque, pour un laps de temps prédéterminé, aucune impulsion de sortie n'est délivrée par l'élément différentiateur (41c).

6. Dispositif redresseur selon l'une des revendications précédentes caractérisé en ce que chacun des dispositifs de contrôle (22, 25) du dispositif de régulation principal et du dispositif de régulation auxiliaire comporte une pluralité de comparateurs (30-34) en vue de la comparaison de la tension alternative d'entrée (U∼), de la tension continue de sortie (U-) et du courant. de charge (I-) à des valeurs de référence prescrites, en aval desquels est disposée une logique d'évaluation (30-40, 42, 43), qui selon la grandeur des signaux d'entrée et en fonction du fait que le dispositif de régulation principal ou le dispositif de régulation auxiliaire est actif, délivre un signal d'avertissement de perturbation (SM), un signal de commutation (US) en vue de la commutation du dispositif de régulation principal sur le dispositif de régulation auxiliaire ou un signal d'arrêt (AS) en vue de la mise hors service du dispositif redresseur.
